# FASCICULE DE BREVET EUROPEEN

(11) **EP 2 763 870 B1**
(45) Date de publication et mention de la délivrance du brevet: **16.12.2015**
(21) Numéro de dépôt: 12769126.9
(22) Date de dépôt: 08.10.2012
(51) Int. Cl.: B60N 2/427, B60N 2/28

(54) **SIEGE AUTO POUR ENFANT, A ASSISE REGLABLE EN HAUTEUR**
KRAFTFAHRZEUGSITZ FÜR EIN KIND MIT EINSTELLBARER HÖHE DES SITZELEMENTS
CAR SEAT FOR A CHILD, THE HEIGHT OF THE SEAT PORTION OF WHICH IS ADJUSTABLE

(30) Priorité: 07.10.2011 FR 1159085
(43) Date de publication de la demande: 13.08.2014
(73) Titulaire: Dorel France, 49309 Cholet Cedex (FR)
(72) Inventeur: RENAUDIN, François, F-49300 Cholet (FR); GARNIER, Nicolas, F-49230 Saint Germain Sur Moine (FR); PASQUIER, Nicolas, F-49700 Doué la Fontaine (FR)
(74) Mandataire: Vidon Brevets & Stratégie
(86) Numéro de dépôt international: PCT/EP2012/069891
(87) Numéro de publication internationale: WO 2013/050610

(56) Documents cités:
- US-A1- 2009 256 404

## Description

Le domaine de l'invention est celui de la puériculture. Plus précisément, l'invention concerne les sièges auto pour enfant qui sont destinés à être installés sur les sièges passagers des véhicules. Elle concerne, en particulier, les sièges auto adaptés à recevoir des enfants de tailles et/ou de poids variables, et susceptibles d'évoluer pour prendre en compte l'évolution d'un enfant sur plusieurs années. Ainsi, l'invention s'applique aux sièges-auto réglables, et dont notamment la têtière peut être réglée en hauteur, par rapport au dossier.

Notamment, l'invention s'applique aux sièges Groupe 2/3, pour des enfants dont le poids est compris entre 15 et 36 kg, ainsi que, dans certains modes de réalisation, aux sièges auto dits Groupes 1/2/3, permettant l'évolution du siège auto de la catégorie Groupe 1, pour des enfants dont le poids est compris entre 9 et 18 kg, à la catégorie Groupe 2/3 pour des enfants dont le poids est compris entre 15 et 36 kg.

Les sièges auto Groupe 1/2/3 adaptés à la fois à des petits et à des grands enfants, c'est-à-dire évolutifs, sont connus. Ces sièges auto doivent être adaptés à différents types de retenue, à savoir un harnais à bretelles solidaire du siège auto pour les plus petits enfants (Groupe 1) et, à partir de l'âge de trois ans, l'utilisation de la ceinture trois points de la voiture pour attacher l'enfant (Groupe 2/3).

L'invention concerne notamment l'optimisation de la mise en oeuvre de cette ceinture trois points.

Les sièges auto sont généralement réglables, pour s'adapter à la taille et à la morphologie de l'enfant. Notamment, pour assurer la sécurité de l'enfant, ainsi que son confort, il convient que la sangle diagonale soit placée de façon précise au niveau de l'épaule de l'enfant. Pour cela, cette sangle diagonale est montée dans un guide-sangle, lui-même monté sur le dossier du siège, et, le plus souvent, sur une têtière, dont la position est réglable le long du dossier. Ainsi, en déplaçant la têtière le long du dossier, pour la placer à la bonne hauteur par rapport à la position de la tête de l'enfant, on déplace simultanément le guide-sangle, qui amène la sangle diagonale au niveau de l'épaule de l'enfant.

Un inconvénient de cette approche est que l'angle formé par la sangle au-dessus du guide-sangle d'une part, et au-dessous du guide-sangle d'autre part, varie, selon la position de la têtière. Il est cependant souhaitable que la sangle s'étende le plus rectilignement possible, et ne présente pas de variation d'angle importante avant et après le guide-sangle.

Par ailleurs, le maintien des enfants par la sangle diagonale de la ceinture de sécurité est parfois insuffisamment efficace. En effet, en cas de choc ou de décélération important, le corps de l'enfant a tendance à glisser vers l'avant, et à passer sous la ceinture de sécurité. Ce phénomène est connu sous le terme de sous-marinage.

Pour lutter contre ce phénomène, on équipe parfois l'assise du siège auto d'une bosse ou d'un élément anti-sous-marinage, qui s'étend devant le bassin de l'enfant pour empêcher ou réduire le glissement vers l'avant. Le document US-A-2009/0256404 décrit un siège d'enfant comprenant une zone d'épaisseur réduite formée dans la partie derrière pour y créer une zone d'écrasement.

Toutefois, ceci n'est généralement pas suffisant, notamment du fait que le siège auto se déplace également vers l'avant lors d'un choc ou d'une décélération.

L'invention a notamment pour objectif de pallier au moins certains de ces inconvénients.

Plus précisément, un objectif de l'invention est de fournir un siège auto assurant un maintien plus efficace et plus sûr d'un enfant, en particulier en cas de choc ou de décélération.

Notamment, un objectif de l'invention est de fournir un tel siège auto, permettant de lutter contre le phénomène de sous-marinage.

Un objectif secondaire de l'invention est de fournir un tel siège auto, assurant un guidage plus efficace de la sangle diagonale.

Ces objectifs, ainsi que d'autres qui apparaîtront plus clairement par la suite sont atteints à l'aide d'un siège auto pour enfant, comprenant une assise.

Selon l'invention, ladite assise est réglable en hauteur entre au moins deux positions, de façon à placer l'enfant dans une position idoine par rapport à une sangle diagonale d'une ceinture de sécurité d'un véhicule destinée à maintenir l'enfant dans ledit siège, ladite assise porte un élément anti-sous-marinage, destiné à s'opposer à un glissement de l'enfant sous ladite sangle abdominale, notamment en cas de choc ou de décélération, et ledit siège est équipé de pinces de solidarisation, permettant d'accrocher ledit siège à des boucles d'accrochage prévues à cet effet dans le véhicule.

Ainsi, la sangle diagonale est toujours placée de façon optimale, puisque la position de la tête et de l'épaule de l'enfant par rapport à la sangle ne change pas. La tête et l'épaule de l'enfant sont ainsi placées de façon correcte, quelle que soit la taille de l'enfant, en déplaçant l'assise en hauteur.

Le fait de déplacer vers le haut l'assise introduit cependant un inconvénient. En effet, il augmente le risque de sous-marinage. Pour lutter contre ce problème, l'invention prévoit une combinaison de deux aspects, la présence d'un élément, par exemple, une bosse, anti-sous-marinage et de pinces de solidarisation, notamment de type Isofix®. Il est à noter que ce dernier aspect n'est pas évident, bien que ces pinces sont connues. En effet, dans le cas où l'enfant, et donc le siège, sont maintenus par la ceinture de sécurité, on considère qu'il n'y a pas besoin de telles pinces, qui apparaissent redondantes, et donc inutiles.

On notera que, selon l'invention, un tel siège auto peut également comprendre un dossier, une têtière, ainsi que des protections latérales destinées à protéger le thorax de l'enfant en cas de choc. Cependant, ces éléments sont optionnels. Notamment, le dossier peut être supprimé en tout ou en partie (par exemple, on ne conserve qu'une partie inférieure du dossier), de sorte que l'enfant s'adosse directement sur le siège du véhicule. De même, le siège auto peut ne pas présenter de têtière : dans ce cas, on peut par exemple prévoir, de part et d'autre de l'assise, des protections latérales tête et thorax en un seul tenant. Enfin, le siège peut être constitué uniquement d'une assise réglable en hauteur, sans autres protections latérales ni dossier.

Dans ce cas, la sangle diagonale peut passer librement, depuis son point de fixation au véhicule, sur l'épaule de l'enfant, ou au travers d'un passage (par exemple une échancrure), formé par exemple dans la protection latérale du siège, ou consistant en l'espace laissé libre entre le dossier du véhicule et la protection latérale du siège auto.

Selon un mode de réalisation particulier, ledit siège comprend un dossier portant des éléments de guidage de ladite sangle diagonale, lesdits éléments de guidage étant fixes par rapport audit dossier.

Ainsi, la sangle diagonale est toujours guidée de façon optimale, puisque la position du guide-sangle par rapport au dossier ne change pas. En revanche, la position de la sangle par rapport à la tête et l'épaule de l'enfant reste optimale, grâce au réglage en hauteur de l'assise du siège auto.

Selon un mode de réalisation particulier, ledit élément anti-sous-marinage est réglable entre au moins deux positions.

Ceci permet d'optimiser le rôle de cet élément anti-sous-marinage en fonction de la taille de l'enfant.

Selon un mode de réalisation particulier, les réglages de ladite assise et dudit élément anti-sous-marinage sont liés. Ainsi, en réglant la position en hauteur de l'assise, on adapte également l'élément anti-sous-marinage, de façon simple et rapide.

Selon différents modes de réalisation, le réglage dudit élément anti-sous-marinage peut notamment agir sur au moins un des aspects appartenant au Groupe suivant :
- réglage de la hauteur d'affleurement ;
- réglage de la position par rapport à ladite assise ;
- réglage de l'inclinaison.

Selon un autre aspect de l'invention, la profondeur de ladite assise peut être réglable. De cette façon, l'assise peut être adaptée à la taille de l'enfant, et notamment à la longueur des jambes de celui-ci.

Dans ce cas, les réglages de la hauteur et de la longueur de ladite assise peuvent être liés.

Selon un autre aspect de l'invention, l'inclinaison de ladite assise est réglable, et les réglages de la hauteur et de l'inclinaison de ladite assise sont liés.

De cette façon, on réduit encore les risques de sous-marinage, puisque pour un enfant petit, pour lequel l'assise va être réglée en position haute, cette dernière sera également inclinée vers l'arrière, ce qui réduira les risques, en cas de choc ou de décélération, que l'enfant glisse sous la sangle abdominale.

Selon les modes de réalisation, lesdits réglages mettent en oeuvre au moins un des éléments appartenant au groupe comprenant les biellettes, les cames, les vis sans fin.

Selon un mode de réalisation particulier de l'invention, le réglage de la hauteur de l'assise met en oeuvre au moins deux cames ou deux biellettes situées respectivement à l'avant et à l'arrière de ladite assise, et l'amplitude de la biellette ou de la came arrière est inférieure à celle de la biellette ou de la came avant, de façon à ce que la levée de l'assise entraîne son inclinaison vers l'arrière.

D'autres caractéristiques et avantages de l'invention apparaîtront plus clairement à la lecture de la description suivante de modes de réalisation de l'invention, donnée à titre illustratif et non limitatif et accompagnée des dessins, parmi lesquels :
- les figures 1A et 1B illustrent, vu de côté, un siège-auto selon l'invention, respectivement :
   ∘ figure 1A : dans une position haute de l'assise (enfant de petite taille) ;
   ∘ figure 1B : dans une position basse de l'assise (enfant de grande taille) ;
- la figure 2 présente, schématiquement, la position de la bosse anti-sous-marinage, dans les positions des figures 1A et 1B respectivement
- les figures 3A et 3B présentent un premier exemple de mécanisme de levée de l'assise à base de cames ;
- les figures 4A et 4B illustrent un deuxième exemple de mécanisme de levée de l'assise à base de biellettes.

L'invention propose donc un nouveau type de sièges auto pour enfant, assurant un positionnement efficace et sûr de la sangle diagonale de ceinture de sécurité, quelle que soit la taille de l'enfant, tout en luttant efficacement contre le phénomène de sous-marinage.

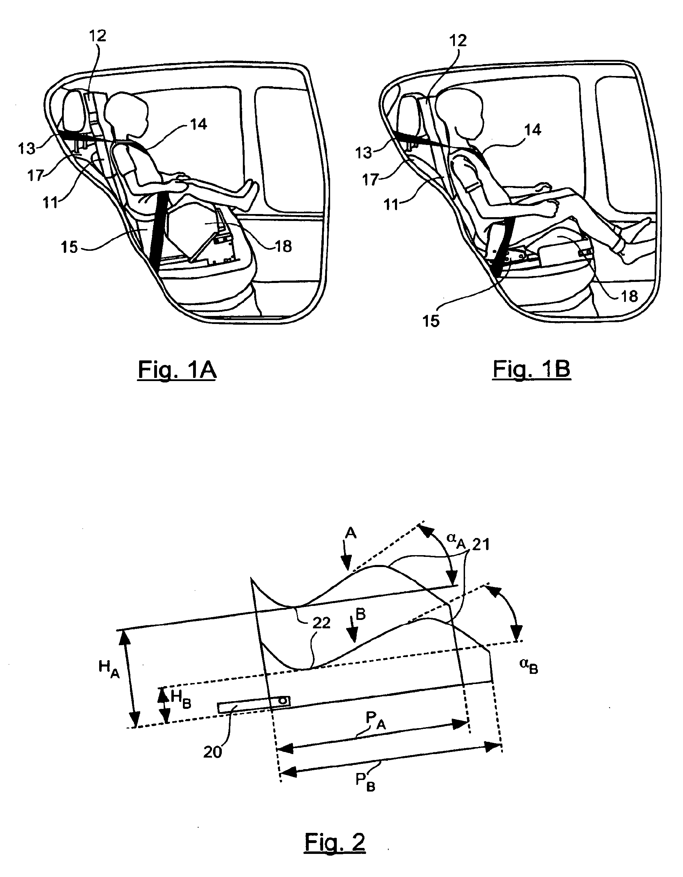

Pour cela, comme on le voit sur les figures 1A et 1B illustrant un premier mode de réalisation de l'invention, le dossier 11 du siège est équipé d'une têtière 12 et d'un guide-sangle 13 fixes par rapport au dossier.

Ce guide-sangle 13 a été conçu et placé sur le dossier en une position optimale pour assurer le guidage de la sangle de ceinture de sécurité 14.

Ainsi, quelle que soit la taille de l'enfant, la tête et les épaules de ce dernier sont tout le temps à la même position, par rapport au haut du dossier, et donc par rapport au guide-sangle 13. Pour cela, l'assise 15 est réglable en hauteur, de façon à adapter la distance entre cette assise et la têtière à la taille de l'enfant.

Quand l'enfant est de petite taille, comme illustré sur la figure 1A, l'assise est placée en position haute. Inversement, pour un enfant de grande taille, comme illustré sur la figure 1B, l'assise 15 est ramenée vers le bas.

Cette approche est donc efficace, pour le guidage de la sangle diagonale de ceinture de sécurité. En revanche, elle peut amplifier les risques de sous-marinage, notamment lorsque l'assise est placée en position haute. Pour lutter contre ce phénomène, on met en oeuvre une bosse anti-sous-marinage, qui est de préférence réglable selon la position de l'assise.

En outre, le siège est équipé de pinces Isofix® (non visibles sur les figures 1A et 1B, mais représentées schématiquement sur la figure 2, référence 20), qui permettent de maintenir le dossier 11 plaqué contre le dossier 17 du véhicule.

Comme on le voit sur la figure 1A, la partie avant 18 de l'assise forme un angle plus important avec l'horizontal dans le cas où l'assise est en position haute que dans le cas de la figure 1B.

Ainsi, la bosse anti-sous-marinage 21 est placée de façon adaptée, en fonction de la morphologie de l'enfant transporté. Sur la figure 2, on a représenté schématiquement la partie supérieure de l'assise et la bosse anti-sous-marinage 21, respectivement dans le cas de la figure 1A (flèche A) et de la figure 1B (flèche B).

L'assise peut donc prendre au moins deux positions distinctes en hauteur H_{A}, H_{B}. Plusieurs positions intermédiaires peuvent bien sûr être prévues. Le réglage entre les deux positions extrêmes peut également être continu.

L'assise présente donc un creux 22, au niveau du fessier de l'enfant, puis une bosse anti-sous-marinage 21, dont la position est adaptée, en fonction de la position du bassin et des jambes de l'enfant. Son inclinaison α_{A}, α_{B}, peut également être réglée, pour maximiser l'action anti-sous-marinage.

Plus généralement, la forme, le volume, l'affleurement par rapport à la surface supérieure de l'assise et/où l'angle formé par rapport à l'horizontale par la bosse anti-sous-marinage peuvent être adaptés, en fonction de la hauteur de l'assise.

Par ailleurs, selon un mode de réalisation particulier, la profondeur P_{A}, P_{B} de l'assise est également réglable, pour mieux encore s'adapter à la taille de l'enfant.

Bien que les différents réglages puissent être indépendants, une approche intéressante est de les lier les uns aux autres. Ainsi, le passage de la hauteur H_{A} à la hauteur H_{B} entraîne automatique le passage de la profondeur P_{A} à la profondeur P_{B} et/ou le passage de l'inclinaison α_{A} à l'inclinaison α_{B}.

Ces différents déplacements peuvent être contrôlés par une action manuelle, par exemple à l'aide d'une manivelle ou d'un bouton. Dans d'autres modes de réalisation, ces déplacements peuvent être motorisés.

Ils peuvent par exemple mettre en oeuvre des biellettes, des cames, des vis sans fin, des crémaillères, des engrenages,...

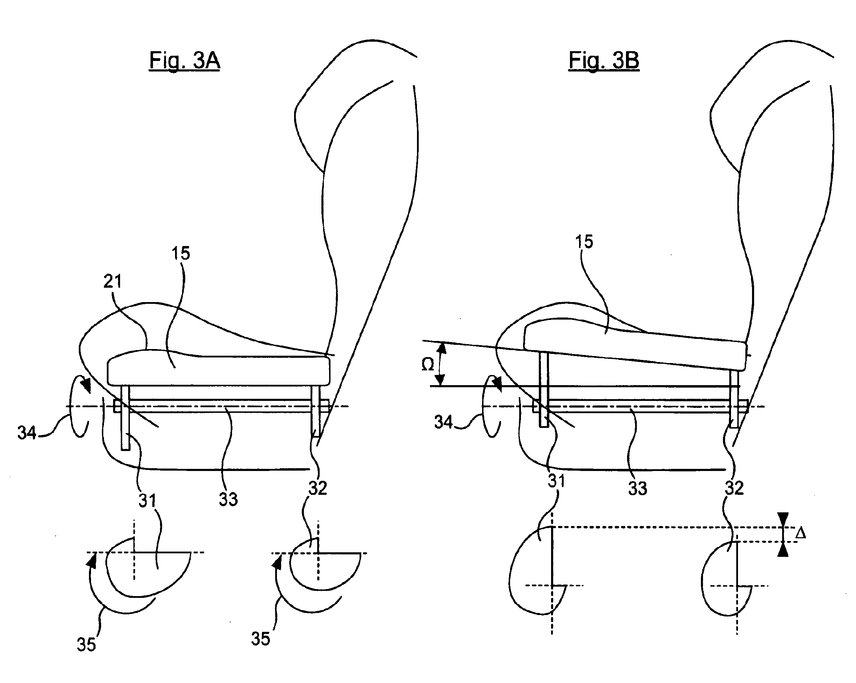

On présente désormais, en relation avec les figures 3A et 3B, un premier exemple de mécanisme de levée de l'assise du siège auto selon l'invention, à base de cames.

L'assise 15, présentant une bosse anti sous-marinage 21, est montée sur deux cames, une came avant 31 et une came arrière 32. Ces deux cames 31, 32 sont solidaires d'un même axe 33, apte à se mouvoir en rotation (flèche 34), par exemple au moyen d'une manipulation manuelle d'une manivelle ou d'un bouton, non représentés sur la figure. La rotation 34 de l'axe 33 entraîne la rotation 35 des cames 31 et 32, qui provoque la levée de l'assise 15.

En outre, on prévoit avantageusement que la came avant 31 soit de plus grande amplitude que la came arrière 32, de sorte que, outre la levée de l'assise 15, la rotation 35 des cames 31, 32 entraîne également son inclinaison Ω, du fait de la différence d'amplitude Δ entre les deux cames.

On notera que le déplacement des cames 31, 32 est continu lors de la rotation de l'axe 33, de sorte que l'inclinaison Ω évolue progressivement, au fur et à mesure de la levée de l'assise 15.

La figure 3A illustre donc une première position basse de l'assise 15, adaptée à un enfant de grande taille, dans laquelle l'inclinaison de l'assise est sensiblement nulle.

La figure 3B illustre quant à elle une deuxième position haute de l'assise 15, adaptée à un enfant de petite taille, dans laquelle l'inclinaison de l'assise est de valeur Ω.

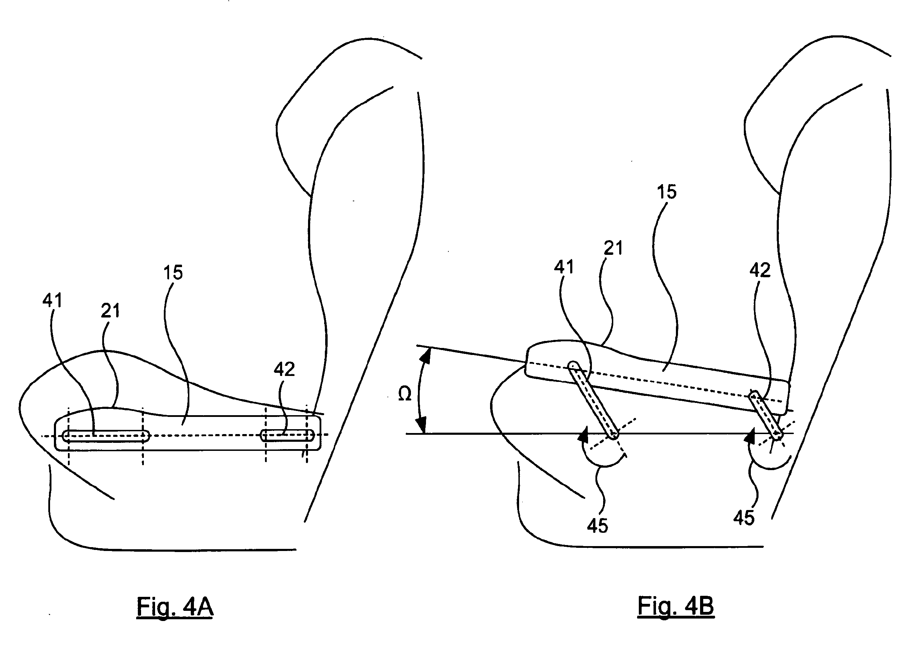

Les figures 4A et 4B illustrent un autre mode de réalisation, dans lequel la levée de l'assise 15 se fait au moyen de biellettes, à savoir une biellette avant 41 située sous la partie avant de l'assise 15, et une biellette arrière 42, située sous la partie arrière de l'assise 15. La biellette avant 41 est donc sensiblement située sous la bosse anti sous-marinage 21.

On prévoit que la biellette avant 41 soit plus longue que la biellette arrière 42. La rotation simultanée des biellettes, symbolisée par les flèches 45, provoque la levée de l'assise 15. Conjointement, la différence de longueur entre les biellettes 41 et 42 provoque l'inclinaison Ω de l'assise 15.

Ainsi, la bosse anti-sous-marinage 21 est placée de façon adaptée, en fonction de la morphologie de l'enfant transporté.

La figure 4A illustre donc une première position basse de l'assise 15, adaptée à un enfant de grande taille, dans laquelle l'inclinaison de l'assise est sensiblement nulle.

La figure 4B illustre quant à elle une deuxième position haute de l'assise 15, adaptée à un enfant de petite taille, dans laquelle l'inclinaison de l'assise est de valeur Ω.

Comme dans l'exemple de la figure 2, les mécanismes des figures 3A-3B et 4A-4B sont donc conçus de façon à ce que le passage de l'assise 15 d'une hauteur H_{A} à une hauteur H_{B} entraîne automatiquement le passage d'une inclinaison α_{A} à une inclinaison α_{B}.

On notera que, sur les figures 3 et 4, le siège auto de l'invention a été représenté comme comprenant, outre l'assise, un dossier, une têtière et des protections latérales. Comme déjà évoqué précédemment, l'invention concerne également un tel siège auto qui serait dépourvu en totalité ou en partie de dossier et/ou de têtière et/ou de protections latérales. En effet, la simple présence d'une assise réglable en hauteur, combinée à la présence d'un élément anti sous-marinage et de pinces de solidarisation (par exemple des pinces Isofix® non visibles sur les figures 3A-3B, 4A-4B) suffit à résoudre le problème technique de l'invention, à savoir fournir un siège auto assurant un maintien plus efficace et plus sûr d'un enfant, en particulier en cas de choc ou de décélération, grâce à un passage de sangle de ceinture optimisé et à une réduction de l'effet de sous-marinage.

## Revendications

1. Siège auto pour enfant, comprenant une assise (15) réglable en hauteur entre au moins deux positions, de façon à placer l'enfant dans une position idoine par rapport à une sangle diagonale d'une ceinture de sécurité d'un véhicule destinée à maintenir l'enfant dans ledit siège,
ladite assise (15) porte un élément anti-sous-marinage (21), destiné à s'opposer à un glissement de l'enfant sous ladite sangle (14) abdominale, notamment en cas de choc ou de décélération,
et ledit siège est équipé de pinces (20) de solidarisation, permettant d'accrocher ledit siège à des boucles d'accrochage prévues à cet effet dans le véhicule.

2. Siège auto selon la revendication 1, **caractérisé en ce que** ledit siège comprend un dossier (11) portant des éléments de guidage (13) de ladite sangle (14) diagonale, lesdits éléments de guidage (13) étant fixes par rapport audit dossier (11).

3. Siège auto selon l'une quelconque des revendications 1 et 2, **caractérisé en ce que** ledit élément anti-sous-marinage (21) est réglable entre au moins deux positions.

4. Siège auto selon la revendication 3, **caractérisé en ce que** les réglages de ladite assise (15) et dudit élément anti-sous-marinage (21) sont liés.

5. Siège auto selon l'une quelconque des revendications 3 et 4, **caractérisé en ce que** le réglage dudit élément anti-sous-marinage (21) agit sur au moins un des aspects appartenant au groupe suivant :
- réglage de la hauteur d'affleurement ;
- réglage de la position par rapport à ladite assise ;
- réglage de l'inclinaison (α_{A}, α_{B}).

6. Siège auto selon l'une quelconque des revendications 1 à 5, **caractérisé en ce que** la profondeur (P_{A}, P_{B}) de ladite assise est réglable.

7. Siège auto selon la revendication 6, **caractérisé en ce que** les réglages de la hauteur (H_{A}, H_{B}) et de la longueur (P_{A}, P_{B}) de ladite assise sont liés.

8. Siège auto selon l'une quelconque des revendications 1 à 7, **caractérisé en ce que** l'inclinaison de ladite assise est réglable, et **en ce que** les réglages de la hauteur et de l'inclinaison de ladite assise sont liés.

9. Siège auto selon l'une quelconque des revendications 1 à 8, **caractérisé en ce que** lesdits réglages mettent en oeuvre au moins un des éléments appartenant au groupe comprenant les biellettes, les cames, les vis sans fin.

10. Siège auto selon l'une quelconque des revendications 8 et 9, **caractérisé en ce que** le réglage de la hauteur de l'assise met en oeuvre au moins deux cames ou deux biellettes situées respectivement à l'avant et à l'arrière de ladite assise, et **en ce que** l'amplitude de la biellette ou de la came arrière est inférieure à celle de la biellette ou de la came avant, de façon à ce que la levée de l'assise entraîne son inclinaison vers l'arrière.

## Patentansprüche

1. Autokindersitz, mit einem Sockel (15), der in der Höhe zwischen mindestens zwei Positionen einstellbar ist, so dass das Kind in eine günstige Position im Verhältnis zu einem diagonalen Gurt eines Sicherheitsgurtes eines Fahrzeuges gesetzt werden kann, um das Kind in dem besagten Autokindersitz festzuhalten,
wobei der besagte Sockel (15) ein Element zum Verhindern des Durchrutschens unter dem Gurt (21) trägt, um sicherzustellen, dass das Kind nicht unter den Bauchgurt (14) durchrutschen kann, insbesondere im Falle eines Aufpralls oder einer Bremsverzögerung und, wobei der besagte Sitz über Verbindungsklammern (20) verfügt, die ein Einhaken des besagten Sitzes an zu diesem Zweck im Fahrzeug angebrachte Ösen ermöglicht.

2. Autokindersitz nach Anspruch 1, **dadurch gekennzeichnet, dass** der besagte Sitz eine Rückenlehne (11) aufweist, welche über Führungselemente (13) für den besagten diagonalen Gurt (14) verfügt, wobei die besagten Führungselemente (13) im Verhältnis zur besagten Rückenlehne (11) fest sind.

3. Autokindersitz nach einem der Ansprüche 1 oder 2, **dadurch gekennzeichnet, dass** das besagte Element zum Verhindern des Durchrutschens (21) zwischen mindestens zwei Positionen einstellbar ist.

4. Autokindersitz nach Anspruch 3, **dadurch gekennzeichnet, dass** die Einstellungen des besagten Sockels (15) und des besagten Elementes zum Verhindern des Durchrutschens (21) miteinander verbunden sind.

5. Autokindersitz nach einem der Ansprüche 3 oder 4, **dadurch gekennzeichnet, dass** die Einstellungen des besagten Sockels (15) und des besagten Elementes zum Verhindern des Durchrutschens (21) auf mindestens eine der Funktionen der folgenden Gruppe wirkt:
- Einstellung der Bündigkeitshöhe;
- Einstellung der Position im Verhältnis zum besagten Sockel;
- Einstellung der Neigung (α_{A}, α_{B}).

6. Autokindersitz nach einem der Ansprüche 1 bis 5, **dadurch gekennzeichnet, dass** die Tiefe (P_{A}, P_{B}) des besagten Sockels einstellbar ist.

7. Autokindersitz nach Anspruch 6, **dadurch gekennzeichnet, dass** die Einstellungen der Höhe (H_{A}, H_{B}) und der Länge (P_{A}, P_{B}) des besagten Sockels miteinander verbunden sind.

8. Autokindersitz nach einem der Ansprüche 1 bis 7, **dadurch gekennzeichnet, dass** die Neigung des besagten Sockels einstellbar ist und, dass die Höhen- und Neigungseinstellungen des besagten Sockels miteinander verbunden sind.

9. Autokindersitz nach einem der Ansprüche 1 bis 8, **dadurch gekennzeichnet, dass** die besagten Einstellungen mindestens eines der Elemente aus der Gruppe ins Spiel bringen, die kleine Schwingarme, Nocken und Endlosschneckenantriebe umfasst.

10. Autokindersitz nach einem der Ansprüche 8 oder 9, **dadurch gekennzeichnet, dass** die Höheneinstellung des Sockels mindestens zwei Nocken oder zwei kleine Schwingarme zum Einsatz bringt, die jeweils am vorderen und am hinteren Teil des besagten Sockels angebracht sind und, dass die Amplitude des hinteren kleinen Schwingarmes bzw. der hinteren Nocke geringer ist, als die des vorderen kleinen Schwingarmes bzw. der vorderen Nocke, so dass ein Anheben des Sockels dazu führt, dass er nach hinten geneigt wird.

## Claims

1. Car seat for a child, comprising a seat base (15) adjustable for height between at least two positions so as to place the child in an appropriate position with respect to a diagonal strap of a safety belt of a vehicle intended to hold the child in said seat,
said seat base (15) carrying an anti-submarining element (21) intended to oppose a sliding of the child under the abdominal strap (14), in particular in the case of impact or deceleration,
and said seat being equipped with securing clamps (20) for attaching said seat to attachment loops provided for this purpose in the vehicle.

2. Car seat according to claim 1, **characterised in that** said seat comprises a back rest (11) carrying elements (13) for guiding said diagonal strap (14), said guiding elements (13) being fixed with respect to said back rest (11).

3. Car seat according to either one of claims 1 and 2, **characterised in that** said anti-submarining element (21) is adjustable between at least two positions.

4. Car seat according to claim 3, **characterised in that** the adjustments of said seat base (15) and said anti-submarining element (21) are linked.

5. Car seat according to either one of claims 3 and 4, **characterised in that** the adjustment of said anti-submarining element (21) acts on at least one of the aspects belonging to the following group:
- adjustment of the protrusion height;
- adjustment of the position with respect to said seat base;
- adjustment of the inclination (α_{A}, α_{B}).

6. Car seat according to any one of claims 1 to 5, **characterised in that** the depth (P_{A}, P_{B}) of said seat base is adjustable.

7. Car seat according to claim 6, **characterised in that** the adjustments of the height (H_{A}, H_{B}) and of the depth (P_{A}, P_{B}) of said seat base are linked.

8. Car seat according to any one of claims 1 to 7, **characterised in that** the inclination of said seat base is adjustable and **in that** the adjustments of the height and inclination of said seat base are linked.

9. Car seat according to any one of claims 1 to 8, **characterised in that** said adjustments use at least one of the elements belonging to the group comprising links, cams and worms.

10. Car seat according to either one of claims 8 and 9, **characterised in that** the adjustment of the height of the seat base uses at least two cams or two links situated respectively at the front and rear of said seat base, and **in that** the amplitude of said rear cam or link is less than that of the front cam or link, so that the raising of the seat base causes inclination thereof towards the rear.
